(19) **Europäisches Patentamt**
**European Patent Office**
**Office européen des brevets**

(11) **EP 2 071 737 B1**

(12) **EUROPEAN PATENT SPECIFICATION**

(45) Date of publication and mention
of the grant of the patent:
**09.03.2016 Bulletin 2016/10**

(21) Application number: **07076089.7**

(22) Date of filing: **14.12.2007**

(51) Int Cl.:
***H04W 52/12*** *(2009.01)*

(54) **Method of management of power in UTRAN networks**

Leistungsverwaltungsverfahren in UTRAN-Netzwerken

Procédé de gestion de la puissance dans des réseaux utran

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**17.06.2009 Bulletin 2009/25**

(73) Proprietors:
• **Vodafone Group PLC
Newbury
Berkshire RG14 2FN (GB)**
• **Vodafone Espana, S.A.
28108 Alcobendas,
Madrid (ES)**
Designated Contracting States:
**ES**

(72) Inventors:
• **Sierra Marco, Manuel**
**28015 Madrid (ES)**
• **Le Pézennec, Yannick**
**28003 Madrid (ES)**
• **Domiguez Romero, Francisco Javier**
**28032 Madrid (ES)**

(74) Representative: **Boult Wade Tennant
Verulam Gardens
70 Gray's Inn Road
London WC1X 8BT (GB)**

(56) References cited:
**WO-A-2004/054130     WO-A-2005/050893**

## Description

Object of the invention.

The present invention relates a new method of measurement of the quality and efficiency of OLPC algorithms (Outer Loop Power Control algorithms) based on the use of the short term BLER, that is the Block Error Rate averaged over short periods of time meaningful from an end user perception. The objective of the OLPC measurement method is to ensure that the BLER quality target is statistically met under certain time windows relevant to the QoS (Quality of Service) perceived by the user, instead of having the BLER being measured over time windows too long to be relevant to the end user from a QoS point of view. The present invention allows measuring the efficiency of the OLPC algorithms implemented in radio mobile networks.

Field of the invention.

The present invention is specifically applicable to so-called "*third-generation*" system such as the UMTS terrestrial radio access network (UTRAN).

Background of the invention.

In UTRAN networks, the appropriate management of power is crucial in terms of capacity and user performance. Ideally, the power that both networks and user's equipment (UE) transmits/receives, should be the one strictly required to be able to achieve the quality target defined by the network, that is defined by the BLER quality target. This is achieved through two algorithms, the ILPC and the OLPC algorithms (Inner and Outer Loop Power Control, respectively).

The first algorithm is responsible for adapting the power of the traffic channel that networks and user's equipment receive/transmit to a certain SIR (signal-to-interference radio) target. The second algorithm is responsible for adjusting dynamically the adequate SIR target, in order to achieve the BLER quality target set by the operator.

Current implementations of the OLPC algorithm have been proven to be inefficient for two main reasons:

(a) Non fulfillment of the quality target. The BLER target for a given call (e.g. speech) is not met by the OLPC algorithm.

(b) Slow convergence towards the quality target. The BLER target for the full duration of the given call is met overall, but in a timeframe that is not relevant from the user quality point of view. This is characterized by a non-uniform distribution of errors during the call, leading to long periods with no errors and other periods with significant amount of errors whilst the long-term BLER measurement all meets the BLER target.

In the periods of no errors, the quality of the call is good but at expenses of consuming more power that needed leading to a capacity decrease. In the periods with significant amount of errors, the quality of service of the call is very poor undermining the quality perceived by the user.

The main goal of a good OLPC algorithm should be to track the BLER target during short periods of time. The BLER target is defined by the operator as an acceptable level of errors from the user perceived quality point of view for a given services. Therefore, the short term BLER should be no more and no less than this BLER target.

Currently the industry has been predominantly focused on optimizing power control algorithm to match the BLER target but on long term basis. The scale of inefficiencies of the algorithms has consequently not been discovered yet.

The US 2002/0187802 application describes a method adjusting the target value of an inner power control loop in a mobile radio communication system, in which method:

- Said inner loop target value is adjusted by a control loop referred to as a "first outer loop" operating on the basis of a quality indicator referred to a "first quality indicator" and of a target value for said first quality indicator referred to as a "first outer loop target value";

- Said first outer loop target value is adjusted by a control loop referred to as a "second outer loop" operating on the basis of a quality indicator referred to as a "second quality indicator" and of a target value for said second quality indicator referred to as a "second outer loop target value'; and

- Said second quality indicator gives an error rate and said first outer loop target value is adjusted each time an error is detected.

The US 2005/0143012 application describes a transmit power control method in a radio system supporting a use of coding blocks in communication between a base station and user equipment, the method including receiving coding blocks in at least one base station having a target signal-to-interference ratio (SIR) value, decoding the received coding blocks by the base station, measuring a SIR value, comparing, by the base station, the measured SIR value with the target SIR value of the base station, the method comprising:

- determining a quality of a received coding block;
- storing samples of differences between a measured SIR value and a target SIR value;
- adjusting the target SIR value based on values of the samples of the differences between the measured SIR value and the target SIR value, and the quality of the received coding block; and
- Providing a transmit power control command based on the adjusted target SIR value to the user equipment.

The US 2004/0082301 application describes a method of controlling an outer loop for controlling the adjustment of a primary target value of an inner power control loop in a telecommunications installation, wherein an outer loop feeding said inner loop with a primary target value corresponding to a service, wherein if there are at least two different services in said installation, one service is selected dynamically and as a function of a selected criterion so that said outer loop can determine a primary target value corresponding to the selected service.

The WO 2005/055464 application describes a method for call case controlled BLER or bit error rate (BER) target setting for a radio link in a CDMA mobile to mobile and mobile to public switched telephone network communication system, with the steps of:

- Defining a desired total BLER/BER target value.
- Detecting if a call is mobile to mobile or mobile to public switched telephone network.
- In case of mobile to mobile call controlling the BLER/BER on a second link to give a total BLER/BER according to the total BLER/BER target.

The US 2006/0079264 application describes a method comprising a step in which a service access point (SAP) of a radio access network (RAN) determines a new signal-to-interface radio (SIR) target corresponding to an indicator of channel quality by comparing a target value for the indicator of channel quality with a measured value for the indicator of channel quality; and a step in which the SAP uses the SIR target to provide power control commands to a user equipment device providing an uplink signal.

The US 2006/0293075 application describes a method for improving power control in a communication system comprising processing data for transmission of a plurality of data channels, wherein each of the plurality of data channels comprises one of a plurality of transport formats, and each transport format has a specific block length; acquiring an initial quality value for the plurality of transport channels; adjusting the quality value for each remaining transport channel of the plurality of transport channels and transmitting the data to maintain a target signal quality value.

International Patent Application WO2004054130 A2 describes a fast method of adjusting an SIR toward a final value needed to achieve a specified target BLER, the aim of the method being to reduce transmit power and capacity by means of three different modes to be implemented in an OLPC.

Description of the invention.

To avoid the problems above mentioned, the present invention relates a method of measuring the BLER of the call in order to evaluate the management of power implemented in UTRAN networks optimizing and achieving better QoS and capacity. Various respective aspects and features of the present disclosure are defined in the appended claims.

The methodology for measuring OLPC performance and improvement is based on using the short term BLER (BLER averaged through short time intervals) instead of averaged BLER of the whole duration of the call. Then, OLPC measurement would be focalized on the fine tracking of a short term BLER key performance indicator (KPI).

The most currently used methods measure the BLER over the whole call. This measurement technique means, i.e. the BLER during 3, 5 or 10 minutes obtaining only one value, normally described in the literature as a percentage (X %).

Nevertheless, the present invention measures the BLER during short intervals of time, in the range of seconds, showing a distribution of these short term BLER values. The ideal OLPC should have short term BLER measurements equal to the BLER target. Then, the efficiency of the algorithm depends on how much the short term BLER distribution match with the ideal curve.

The short term BLER is defined as:

$$ST_{BLER} = \frac{Number\_of\_blocks\_with\_errors}{Total\_number\_of\_blocks}$$

during a time interval described as $T_{ST\_BLER}$.

The time interval, in which the $ST_{BLER}$ is measured, should be long enough to measure the required BLER but, at the same time, it needs to reflect the user perception of the service quality. A proper value should be in the order of seconds. In addition, the definition has to be applicable to several BLER target and services.

For conversational services, a time interval of «$T_{ST\_BLER}$» seconds is defined depending on the BLER target, so that there should be four errors in average, per interval:

$$\overline{T_{ST_{BLER}}} = \frac{4/BLER_{target}}{Block\_Rate}$$

In data services, it is better not use the aforementioned formula because it is used a high BLER target and the block rate may be variable. Therefore, $T_{ST\_BLER}$ is defined for data services equal to a fixed value of 4 seconds.

There are two main constraints that have to be taken into account. The first one is the low BLER limitation metric, which is a capacity constraint in the present invention:

The objective of this metric is to avoid a high number of intervals with too low BLER. These intervals of $T_{ST\_BLER}$ seconds with none or only one error are designated as «*very low BLER intervals*» because the $ST_{BLER}$ in those intervals is at least four times lower than the BLER target.

The value of this metric of the KPI will be:

$$\sum_{intervals} \left( ST_{BLER} \le \frac{BLER_{target}}{4} \right) < VL_{BLER}\%$$

Therefore, in a communication there should not be more than $VL_{BLER}$ of very low BLER intervals wherein this $VL_{BLER}$ can be defined by the operator.

The second constraint is a quality constraint or low quality limitation metric. The objective of this metric is to avoid a high number of intervals with low quality (high BLER). A little number of these intervals will destroy the user perception. Time intervals of $T_{ST\_BLER}$ seconds with eight or more errors, and consequently with $ST_{BLER}$ at least two times higher than BLER target, are defined as «*poor quality intervals*».

The value of this metric of the KPI will be:

$$\sum_{intervals} \left( ST_{BLER} \ge 2 \times BLER_{target} \right) < HL_{BLER}\%$$

Therefore, in a communication there also should not be more than $HL_{BLER}$ of poor quality intervals (high level of BLER).

For implementing a short term BLER counter for the uplink case it is implemented an algorithm wherein:

i. It is established a radio interface transmission between the user's equipment and one Node. In that Node, every error is detected in every transport block received by the RNC.

ii. In the RNC is calculated the short term BLER according to the formula.

iii. The short term BLER counter is reported to the OMC.

The counter can be used as previously commented to evaluate the inefficiencies of the algorithm and fine tune the parameters to optimize the performance.

For implementing a short term BLER counter for the downlink case it is implemented an algorithm wherein:

i. It is established the radio interface transmission between the user's equipment and one Node, wherein the RNC configures transport channel BLER measurement report from the user's equipment.

ii. Every error is detected in every transport block received by the UE, and reported to the RNC every T seconds.

iii. In the RNC it is calculated the downlink short term BLER according to the formula aforementioned.

iv. The short term BLER counter is reported to the OMC.

Brief description of the drawings.

Following, it is briefly described some figures that helps to better understand the invention. The figures also describe an embodiment of the present invention, as non-limitative example:

The figure 1 shows the $ST_{BLER}$ conformance mask.
The figure 2 shows the short term BLER counter implementation block diagram in the uplink case.
The figure 3 shows the short term BLER counter implementation block diagram in the downlink case.

Preferred embodiment of the invention.

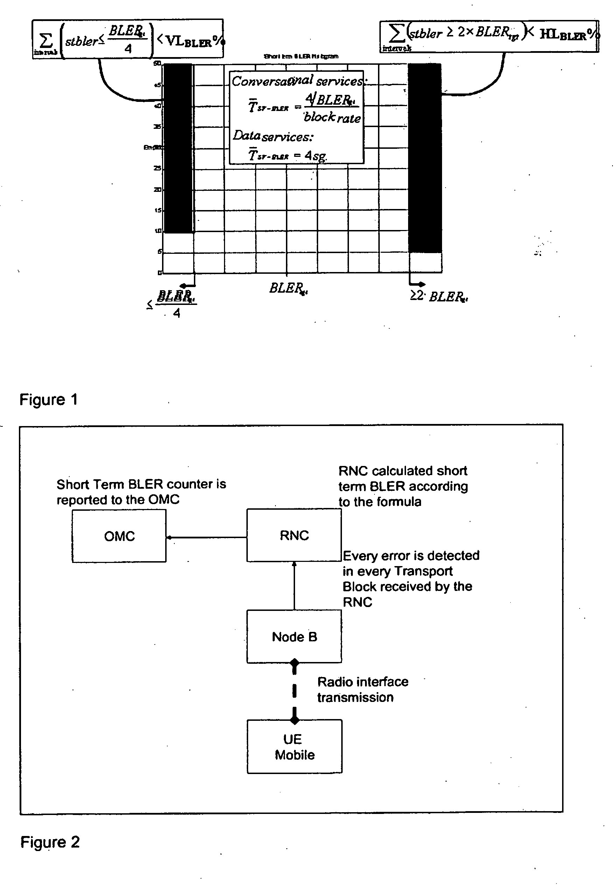

In the figure 1 it is possible to see the $ST_{BLER}$ conformance mask, wherein there are two main constraints comprising, at least:

(i) A first constraint (1) that is the low BLER limitation metric, which is a capacity constraint characterized in that avoids a high number of intervals with too low BLER; these intervals of $T_{ST\_BLER}$ seconds with none or only one error are designated as «*very low BLER intervals*» because the $ST_{BLER}$ in those intervals is at least four times lower than the BLER target; the value of this metric of the KPI will be:

$$\Sigma_{intervals}\left(ST_{BLER} \leq \frac{BLER_{target}}{4}\right) < VL_{BLER}\% \ (11);$$

therefore, in a communication there should not be more than $VL_{BLER}$ of very low BLER intervals wherein this $VL_{BLER}$ can be defined by the operator.

(ii) A second constraint (2) that is a quality constraint or low quality limitation metric characterized in that avoids a high number of intervals with low quality (high BLER). A little number of these intervals will destroy the user perception. Time intervals of $T_{ST\_BLER}$ seconds with eight or more errors, and consequently with $ST_{BLER}$ at least two times higher than BLER target, are defined as «*poor quality intervals*»; the value of this metric of the KPI will be:

$$\Sigma_{intervals}\left(ST_{BLER} \geq 2 \times BLER_{target}\right) < HL_{BLER}\% \ (21);$$

therefore, in a communication there also should not be more than $HL_{BLER}$ of poor quality intervals (high level of BLER).

For conversational services (3), a time interval of «$T_{ST\_BLER}$» seconds is defined depending on the BLER target, so that there should be four errors in average, per interval:

$$\overline{T_{ST_{BLER}}} = \frac{4/BLER_{target}}{Block\_Rate} \ (31);$$

in data services, it is better not use the formula (31); because it is used a high BLER target and the block rate may be variable. Therefore, $T_{ST\_BLER}$ is defined for data services (4) equal to a fixed value of 4 seconds.

For implementing a short term BLER counter for the uplink case (figure 2) it is implemented an algorithm wherein:

a. It is established a radio interface transmission 100 between the user's equipment 101 and one Node 102. In that Node 102, every error 103 is detected in every transport block received by the RNC 104.
b. In the RNC 104 is calculated the short term BLER according to the formula.
c. The short term BLER counter is reported to the OMC 105.

The counter can be used as previously commented to evaluate the inefficiencies of the algorithm and fine tune the parameters to optimize the performance.

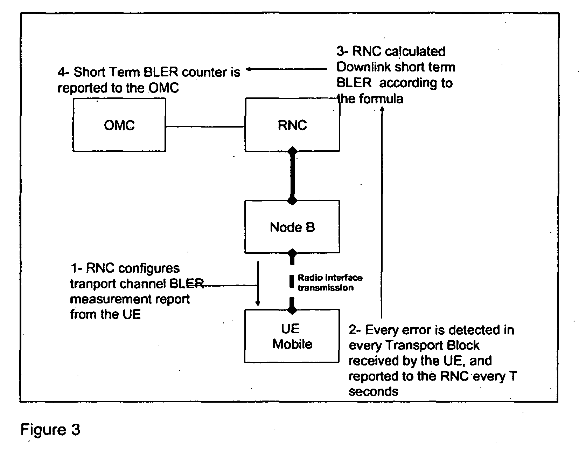

For implementing a short term BLER counter for the downlink case (figure 3) it is implemented an algorithm wherein:

a. It is established the radio interface transmission 200 between the user's equipment 201 and one Node 202, wherein the RNC configures transport channel BLER measurement report 203 from the user's equipment 201.

b. Every error is detected 204 in every transport block received by the UE, and reported to the RNC every T seconds.

c. In the RNC 205 it is calculated the downlink short term BLER according to the formula aforementioned.

d. The short term BLER counter is reported to the OMC 206.

**Claims**

1. Method of evaluating a management of power transmitted and/or received in a call between a user's equipment, UE, and a Node B in a UMTS terrestrial radio access network, UTRAN, comprising the step of:

defining a short time interval, $T_{ST\_BLER}$, for measuring block error rate, BLER, the short time interval being substantially shorter than a duration of the call;

defining a short time BLER, $ST_{BLER}$, value as a number of blocks with errors in any given $T_{ST\_BLER}$ interval divided by a total number of blocks transmitted in said $T_{ST\_BLER}$ interval;

for each of a plurality of $T_{ST\_BLER}$ intervals during the call, calculating a respective short time BLER, $ST_{BLER}$, value; and

detecting whether a percentage of the calculated $ST_{BLER}$ values fulfils a capacity constraint and a quality constraint;

wherein:

if the call is a conversational service, the short time interval, $T_{ST\_BLER}$, is defined as:

$$\overline{T_{ST_{BLER}}} = \frac{4/BLER_{target}}{Block\_Rate}$$

where $BLER_{target}$ is a predefined BLER target and Block_Rate is a measure of a number of blocks transmitted in a unit of time, so that there are on average four errors per short time interval;

if the call is a data service, the short time interval, $T_{ST\_BLER}$, is defined to be equal to a fixed value of 4 seconds; and

wherein:

the capacity constraint is fulfilled when the percentage of $ST_{BLER}$ below a quarter of the BLER target is lower than a pre-established threshold indicating very low BLER, $VL_{BLER}$; and

the quality constraint is fulfilled when the percentage of $ST_{BLER}$ above two times of the BLER target is lower than a pre-established threshold indicating high BLER, $HL_{BLER}$;

in order to measure the efficiency and performance of an outer loop power control, OLPC, algorithm implemented in said UTRAN.

2. Method according to claim 1, wherein the step of detecting the percentage of $ST_{BLER}$ values fulfilling a capacity constraint and a quality constraint is performed in an uplink channel by:

establishing a radio interface transmission between the UE and the Node B,

from the Node B, reporting the detection of each transport block transmitted by the UE to the Node B that has an error to a radio network controller, RNC, the RNC being connected to the Node B;

calculating the $ST_{BLER}$ in the RNC,

reporting the $ST_{BLER}$ to an operation and maintenance centre, OMC.

3. Method according to claim 1, wherein the step of detecting the percentage of $ST_{BLER}$ values fulfilling a capacity constraint and a quality constraint is performed in a downlink channel by:

establishing a radio interface transmission between the UE and the Node B, a transport channel BLER measurement report of the UE being configured by a radio network controller, RNC, that is connected to the Node B;

detecting each transport block received by the UE from the Node B that has an error and reporting detection of said error to the RNC via the Node B,

calculating ST$_{BLER}$ in the RNC,
reporting the ST$_{BLER}$ to an operation and maintenance centre, OMC.

**Patentansprüche**

1. Verfahren zum Beurteilen von Management von Leistung, die zwischen einem Benutzergerät UE und einem Knoten B in einem UTRAN (UMTS terrestrial radio access network) gesendet und/oder empfangen wird, das die folgenden Schritte beinhaltet:

Definieren eines Kurzzeitintervalls T$_{ST\_BLER}$ zum Messen von Blockfehlerquote BLER, wobei das Kurzzeitintervall erheblich kürzer ist als eine Dauer des Anrufs;
Definieren eines Kurzzeit-BLER-(ST$_{BLER}$)-Wertes als eine Anzahl von Blöcken mit Fehlern in einem beliebigen gegebenen T$_{ST\_BLER}$-Intervall, dividiert durch eine Gesamtzahl von in dem genannten T$_{ST\_BLER}$-Intervall gesendeten Blöcken;
Berechnen, für jedes von mehreren T$_{ST\ BLER}$-Intervallen während des Anrufs, eines jeweiligen Kurzzeit-BLER-(ST$_{BLER}$)-Wertes; und
Erkennen, ob ein Prozentanteil der berechneten ST$_{BLER}$-Werte eine Kapazitätsbeschränkung und eine Qualitätsbeschränkung erfüllt;

wobei:

wenn der Anruf ein Konversationsdienst ist, das Kurzzeitintervall T$_{ST\_BLER}$ definiert wird als:

$$\overline{T_{ST_{BLER}}} = \frac{4/BLER_{target}}{Block\_Rate}$$

wobei BLER$_{target}$ ein vordefiniertes BLER-Ziel ist und Block_Rate ein Maß für eine Anzahl von in einer Zeiteinheit gesendeten Blöcken ist, so dass es im Durchschnitt vier Fehler pro Kurzzeitintervall gibt;
wenn der Ruf ein Datendienst ist, das Kurzzeitintervall T$_{ST\_BLER}$ als gleich einem festen Wert von 4 Sekunden definiert ist; und

wobei:

die Kapazitätsbeschränkung erfüllt wird, wenn der Prozentanteil von ST$_{BLER}$ unter einem Viertel des BLER-Ziels niedriger ist als ein voreingestellter Schwellenwert, der einen sehr niedrigen BLER (VL$_{BLER}$) anzeigt; und
die Qualitätsbeschränkung erfüllt ist, wenn der Prozentanteil von ST$_{BLER}$ über dem Zweifachen des BLER-Ziels niedriger ist als eine voreingestellte Schwelle, die einen hohen BLER (HL$_{BLER}$) anzeigt;

zum Messen von Effizienz und Leistung eines in dem genannten UTRAN implementierten OLPC-(Outer Loop Power Control)-Algorithmus.

2. Verfahren nach Anspruch 1, wobei der Schritt des Erkennens des Prozentanteils von ST$_{BLER}$-Werten, die eine Kapazitätsbeschränkung und eine Qualitätsbeschränkung erfüllen, in einem Uplink-Kanal ausgeführt wird durch:

Einrichten einer Funkschnittstellensendung zwischen dem UE und dem Knoten B,
Melden, vom Knoten B, der Erkennung jedes vom UE zum Knoten B gesendeten Transportblocks, der einen Fehler hat, an einen Funknetz-Controller RNC, wobei der RNC mit dem Knoten B verbunden ist;
Berechnen des ST$_{BLER}$ in dem RNC,
Melden des ST$_{BLER}$ an eine Betriebs- und Wartungszentrale (OMC).

3. Verfahren nach Anspruch 1, wobei der Schritt des Erkennens des Prozentanteils an ST$_{BLER}$-Werten, die eine Kapazitätsbeschränkung und eine Qualitätsbeschränkung erfüllen, in einem Downlink-Kanal ausgeführt wird durch:

Einrichten einer Funkschnittstellensendung zwischen dem UE und dem Knoten B, wobei ein Transportkanal-BLER-Messbericht des UE von einem Funknetz-Controller RNC konfiguriert wird, der mit dem Knoten B verbunden ist;

Erkennen jedes von dem UE vom Knoten B empfangenen Transportblocks, der einen Fehler hat, und Melden der Erkennung des genannten Fehlers an den RNC über den Knoten B,
Berechnen von $ST_{BLER}$ in dem RNC,
Melden des $ST_{BLER}$ an eine Betriebs- und Wartungszentrale (OMC).

## Revendications

**1.** Procédé d'évaluation d'une gestion de la puissance émise et/ou reçue dans un appel entre un équipement d'utilisateur, UE, et un Noeud B dans un réseau d'accès radio terrestre de système UMTS, soit réseau UTRAN, comprenant l'étape consistant à :

définir un intervalle de courte durée, $T_{ST\_BLER}$, pour mesurer un taux d'erreurs sur les blocs, BLER, l'intervalle de courte durée étant sensiblement plus court qu'une durée de l'appel ;
définir une valeur de BLER de courte durée, $ST_{BLER}$, comme nombre de blocs présentant des erreurs dans n'importe quel intervalle $T_{ST\_BLER}$ donné divisé par un nombre total de blocs transmis dans ledit intervalle $T_{ST\_BLER}$ ;
pour chacun d'une pluralité d'intervalles $T_{ST\_BLER}$ durant l'appel, le calcul d'une valeur de BLER de courte durée respective, $ST_{BLER}$ ; et
détecter qu'un pourcentage des valeurs $ST_{BLER}$ calculées satisfait ou non une contrainte de capacité et une contrainte de qualité ;

dans lequel :

si l'appel est un service de conversation, l'intervalle de courte durée, $T_{ST\_BLER}$, est défini par

$$\overline{T_{ST_{BLER}}} = \frac{4/BLER_{target}}{Block\_Rate}$$

où $BLER_{target}$ est un BLER cible prédéfini et Block Rate est une mesure d'un nombre de blocs transmis dans une unité de temps, de telle sorte qu'il existe en moyenne quatre erreurs par intervalle de courte durée ;
si l'appel est un service de données, l'intervalle de courte durée, $T_{ST\_BLER}$, est défini égal à une valeur fixe de 4 secondes ; et

dans lequel :

la contrainte de capacité est satisfaite quand le pourcentage de $ST_{BLER}$ en dessous d'un quart du BLER cible est inférieur à un seuil préétabli indiquant un très faible BLER, $VL_{BLER}$ ; et
la contrainte de qualité est satisfaite quand le pourcentage de $ST_{BLER}$ au-dessus de deux fois le BLER cible est inférieur à un seuil préétabli indiquant un BLER élevé, $HL_{BLER}$ ;

afin de mesurer l'efficacité et la performance d'un algorithme de commande de puissance à boucle externe, OLPC, mis en oeuvre dans ledit réseau UTRAN.

**2.** Procédé selon la revendication 1, dans lequel l'étape consistant à détecter le pourcentage de valeurs $ST_{BLER}$ satisfaisant une contrainte de capacité et une contrainte de qualité est exécutée dans un canal de liaison montante en :

établissant une transmission par interface radio entre l'équipement UE et le Noeud B,
à partir du Noeud B, signalant la détection de chaque bloc de transport transmis par l'équipement UE au Noeud B qui comporte une erreur à un contrôleur de réseau radio, RNC, le contrôleur RNC étant connecté au Noeud B ;
calculant la valeur $ST_{BLER}$ dans le RNC,
signalant la valeur $ST_{BLER}$ à un centre d'opérations et de maintenance, OMC.

**3.** Procédé selon la revendication 1, dans lequel l'étape consistant à détecter le pourcentage de valeurs $ST_{BLER}$

satisfaisant une contrainte de capacité et une contrainte de qualité est exécutée dans un canal de liaison descendante en :

établissant une transmission par interface radio entre l'équipement UE et le Noeud B, un rapport de mesure du taux BLER du canal de transport de l'équipement UE étant configuré par un contrôleur de réseau radio, RNC, qui est connecté au Noeud B ;

détectant chaque bloc de transport reçu par l'équipement UE depuis le Noeud B qui comporte une erreur et signalant la détection de ladite erreur au contrôleur RNC par l'intermédiaire du Noeud B ;

calculant la valeur $ST_{BLER}$ dans le RNC,

signalant la valeur $ST_{BLER}$ à un centre d'opérations et de maintenance, OMC.

$$\sum_{\text{intervals}} \left( stbler \leq \frac{BLER_u}{4} \right) < VL_{BLER}\%$$

$$\sum_{\text{intervals}} \left( stbler \geq 2 \times BLER_{tp} \right) < HL_{BLER}\%$$

Short term BLER Histogram

Conversational services:

$$\overline{T}_{sr\text{-}BLER} = \frac{4/BLER_u}{block\ rate}$$

Data services:

$$\overline{T}_{sr\text{-}BLER} = 4sg.$$

$\leq \frac{BLER_u}{4}$

$BLER_u$

$\geq 2 \cdot BLER_u$

**Figure 1**

Short Term BLER counter is reported to the OMC

RNC calculated short term BLER according to the formula

OMC ← RNC

Every error is detected in every Transport Block received by the RNC

Node B

Radio interface transmission

UE Mobile

**Figure 2**

4- Short Term BLER counter is reported to the OMC

3- RNC calculated Downlink short term BLER according to the formula

OMC

RNC

Node B

1- RNC configures tranport channel BLER measurement report from the UE

Radio Interface transmission

UE Mobile

2- Every error is detected in every Transport Block received by the UE, and reported to the RNC every T seconds

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020187802 A
- US 20050143012 A
- US 20040082301 A
- WO 2005055464 A
- US 20060079264 A
- US 20060293075 A
- WO 2004054130 A2